# EUROPEAN PATENT SPECIFICATION

(11) **EP 1 249 105 B1**
(45) Date of publication and mention of the grant of the patent: **25.02.2009**
(21) Application number: 01960340.6
(22) Date of filing: 18.06.2001
(51) Int. Cl.: H04L 12/56

(54) **DATA DELIVERY THROUGH BEACONS**
DATENÜBERMITTLUNG DURCH BAKEN
REMISE DE DONNEES PAR L'INTERMEDIAIRE DE BALISES

(30) Priority: 26.06.2000 GB 0015454; 15.08.2000 GB 0020099
(43) Date of publication of application: 16.10.2002
(73) Proprietor: Koninklijke Philips Electronics N.V., 5621 BA Eindhoven (NL)
(72) Inventor: DAVIES, Robert, J., NL-5656 AA Eindhoven (NL)
(74) Representative: Damen, Daniel Martijn
(86) International application number: PCT/EP2001/006948
(87) International publication number: WO 2002/001814

(56) References cited:
- EP-A- 0 752 793
- EP-A- 1 006 684
- WO-A-02/01812
- WO-A-02//01804
- WO-A-02//01811
- WO-A-02//01813
- HAARTSEN J: "BLUETOOTH - THE UNIVERSAL RADIO INTERFACE FOR AD HOC, WIRELESS CONNECTIVITY" ERICSSON REVIEW, STOCKHOLM, SE, no. 3, 1998, pages 110-117, XP000783249 ISSN: 0014-0171

## Description

The present invention relates to services offered to users of electronic equipment, especially but not exclusively to users of mobile communications devices such as portable telephones and suitably equipped PDA's (personal digital assistants). The invention further relates to means for delivery of such services, and to portable devices for receiving them.

Recent years have seen a great increase in subscribers world-wide to mobile telephone networks and, through advances in technology and the addition of functionalities, cellular telephones have become personal, trusted devices. A result of this is that a mobile information society is developing, with personalised and localised services becoming increasingly more important. Such "Context-Aware" (CA) mobile telephones are used with low power, short range base stations in places like shopping malls to provide location-specific information. This information might include local maps, information on nearby shops and restaurants and so on. The user's CA terminal may be equipped to filter the information received according to pre-stored user preferences and the user is only alerted if an item of data of particular interest has been received.

An example of a CA terminal is given in U.S. patent 5,835,861 which discloses the use of wireless telephones within the context of advertisement billboards. The user of a wireless telephone obtains the telephone number of a vendor by activating his/her wireless telephone to transmit a prompt signal to an active advertisement source and to receive from the advertisement source a response signal containing the telephone number of the advertising vendor. The telephone number can then be used to automatically place a call to that vendor via the public switched telephone network. Alternatively, the telephone number can be stored for use later on. This arrangement can be used to place a call to a vendor without having to either memorise the telephone number or to write it down. The signals between the billboard and the caller can be transmitted as modulated infrared (IR) signals.

In another example, Hewlett-Packard has posted a publication on the Web at <http://www.cooltown.hp.com/dev/wpapers/webpres/WebPresence.asp> about their "Cooltown" project. The convergence of Web technology, wireless networks and portable client devices provides design opportunities for computer/communications systems. In the Cooltown project, systems that are location-aware can be created using URL's for addressing, physical URL's for delivery via beacons and sensing of URL's for discovery, and localised web servers for directories. The systems are ubiquitous to support nomadic users. On top of this infrastructure the Internet connectivity can be leveraged to support communications services. Web presence bridges the World Wide Web and the physical world inhabited by the users, providing a model for supporting nomadic users without a central control point.

The Cooltown Museum and Bookstore offers visitors a Web-enhanced experience. As visitors tour the museum, their portable digital assistant (PDA) can receive Web URLs from wireless "beacons". These beacons are small infrared transceivers located close to pictures or sculptures; the URLs link into a Web of information about the items. Using the PDA's Web browser, visitors can read or hear about the artist or the work and about related art works in the museum. The URLs can also be stored as bookmarks for further study or they can be used to select reproductions of the artwork from the museum's online store.

It will be recognised that an important requirement for CA devices is that they quickly and efficiently gather data from beacons such that the user is not required to undertake actions such as staying close to a beacon whilst contact is established between portable device and beacon, nor having to specifically initiate interaction (as is the case with the above-mentioned system in US 5,835,861). A further requirement is that the portable device should be kept relatively simple insofar as the data gathering from beacons is concerned: in the Cooltown system, a full web browser and display capability is required to support user navigation within the web page indicated by the URL being broadcast.

An example of a data delivery system where items of data may be quickly and easily made available to a user is described in EP-A-1006684 Mannesmann). In the system described information items are broadcast to mobile users, for instance in the form of traffic information. Additional data, for updating items stored by the mobile user, is simply inserted in unused slots between those encoded information items transmitted. Simplicity is maintained by not providing a back-channel.

It is therefore an object of the invention to provide a system for the delivery of data via beacons whereby the amount of dedicated circuitry and operating procedure are kept to low levels.

In accordance with a first aspect of the present invention there is provided a communications system comprising at least one beacon device capable of wireless message transmission and at least one portable communications device capable of receiving such a message transmission, wherein the beacon is arranged to broadcast a series of inquiry messages, each inquiry message being in the form of a plurality of predetermined data fields arranged according to the Bluetooth communications protocol, wherein the beacon device is further arranged to append to each inquiry message an additional data field, and wherein the at least one portable communications device is arranged to receive the transmitted inquiry messages and additional data fields and read data from said additional data field. By appending the additional field (suitably at the end of a respective inquiry message), data broadcast may be carried on top of an existing inquiry process, such that the usual delays while such a process is carried out prior to data transfer are avoided. Furthermore, by placing the additional field at the end of those sent according to the Bluetooth communications protocol, those protocol-compatible devices not intended for reception of beacon signals can simply ignore the additional data without compromising operation according to protocol.

Where the protocol is Bluetooth (or a similar frequency hopping arrangement) the beacon device may be configured to broadcast a series of inquiry messages on a predetermined sequence of frequencies in a series of time slots, with clock information for the beacon device being carried by the additional data field. As will be described in greater detail hereinafter with respect to embodiments of the invention, this can improve the inquiry performance of a Bluetooth system, shortening the time to establish a connection for data exchange.

The beacon device may be arranged to include an indication in one of said predetermined data fields (suitably in a currently unused or unassigned field), said indication denoting the presence of said additional data field, such that devices configured for reception of beacon data may be triggered to read from the additional data field.

The beacon device may be arranged to include in a message first comparison data, with the portable communications device further comprising storage means holding second comparison data and comparator means arranged to identify when there is a match between the first and second comparison data and present the data read from the additional data field, otherwise to not present the data. Such second comparison data may be predetermined and/or prestored, or it may be determined adaptively from user profiling of the portable device user.

Also in accordance with the present invention there is provided a portable communications device for use in the system recited above, the device comprising a receiver capable of receiving a short-range wireless inquiry message including a plurality of data fields according to the Bluetooth communications protocol, means for determining when an additional data field has been appended to said plurality of data fields, and means for reading data from such an additional data field and presenting the same to a user.

Further in accordance with the present invention, there is provided a beacon device capable of wireless message transmission and for use in a communications system as recited above, wherein the beacon device is configured to broadcast a series of inquiry messages each in the form of a plurality of predetermined data fields arranged according to the Bluetooth communications protocol, and to append to each inquiry message an additional data field, such as to enable at least one portable communications device of the system arranged to receive the transmitted inquiry messages to read data from said additional data field. As described in relation to the system as a whole, the beacon device may be arranged to append said additional data field at the end of a respective inquiry message; it may be arranged to include an indication in one of said predetermined data fields, said indication denoting the presence of said additional data field; and the device may be configured to broadcast a series of inquiry messages on a predetermined succession of frequencies in a series of time slots, with clock information for said beacon device being included in data carried by said additional data field.

Still further in accordance with the present invention, there is provided a method for enabling the user of a portable communications device to receive broadcast messages wherein at least one beacon device broadcasts a series of inquiry messages, wherein each inquiry message is in the form of a plurality of predetermined data fields arranged according to the Bluetooth communications protocol, wherein the beacon device appends to each inquiry message an additional data field carrying broadcast message data, and wherein the portable device receives the transmitted inquiry messages and additional data fields and reads the broadcast data from said additional data field.

Preferred embodiments of the invention will now be described, by way of example only, and with reference to the accompanying drawings, in which:
Fig. 1 is a block schematic diagram of a beacon and portable device embodying the invention;
Fig. 2 is a schematic diagram of a series of devices in a linked beacon infrastructure;
Figure 3 is a chart illustrating the transmission of a train of inquiry access codes centred on a given frequency ;
Figure 4 illustrates alternation between trains of inquiry messages over the duration of an inquiry broadcast;
Figure 5 illustrates the insertion of a packet of broadcast data within an existing transmission slot;
Figure 6 illustrates a first arrangement for sending beacon clock data in a sequence of inquiry message trains; and
Figure 7 illustrates an alternate arrangement to that of Figure 6 for the sending of beacon clock data.

In the following description we consider particularly a CA application which utilises Bluetooth protocols for communication of messages from beacon to portable device (whether telephone, PDA or other). As will be recognised, the general concept of including a broadcast channel as part of the inquiry procedure is not restricted to Bluetooth devices, and is applicable to other communications arrangements, in particular frequency hopping systems.

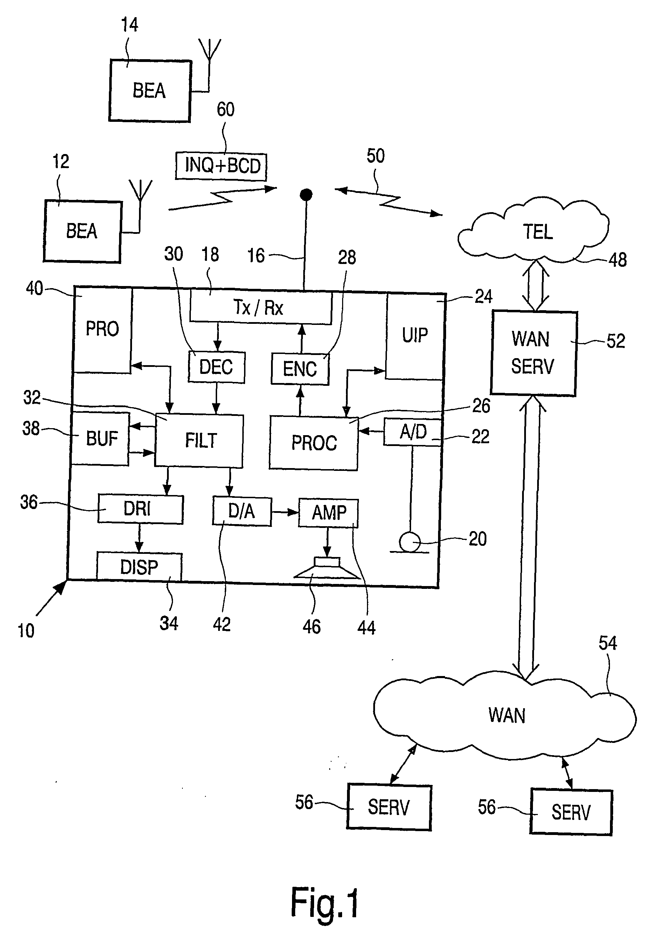

Figure 1 is a block schematic diagram of a CA mobile telephone 10 in use with one or more low power, short range base stations or beacons 12, 14. As mentioned previously, and discussed in greater detail below, such an arrangement may be used in places like shopping malls to provide location-specific information such as local maps, information on nearby shops and restaurants and so on, with the beacon downloading information keys to a mobile device. An information key is a small data object that provides a reference to a source of full information, and it is in the form of a number of predetermined fields, one of which will contain a short piece of descriptive text presented to a user. Another field will be a pointer or address of some form, for example a URL or telephone number. Other supplementary fields may control how the data is presented to a user and how the address may be exploited. The beacon will generally broadcast cyclically a number of these keys, each typically relating to a different service.

Issues relating to the beacon construction and configuration include the beacons range which will be dependent on output power (typical range being 1mW to 100mW), levels of local interference, and receiver sensitivity.

The user's CA terminal 10 comprises an aerial 16 coupled with transceiver stage 18 for the reception and transmission of messages. Outgoing messages result from user input to the telephone, either audio input via microphone 20 and A/D converter 22 or other data input via the keypad or other input means 24. These inputs are processed to message data format by signal and data processing stage 26 and converted to transmission format by encoder 28 before being supplied to the transceiver stage 18.

Messages received via the aerial 16 and transceiver 18 are passed via a decoding stage 30 to a filtering and signal processing stage 32. If the data carried by the message is for presentation on a display screen 34 of the telephone, the data will be passed to a display driver 36, optionally after buffering 38, with the driver formatting the display image. As will be recognised, the display 34 may be a relatively simple low-resolution device, and the conversion of received data to display data may be carried out as a subset of the processing stage 32 functionality, without the requirement for a dedicated display driver stage.

Where the message is carrying data from one or other of the beacons 12, 14, the telephone has the ability to filter the information received according to pre-stored 40 user preferences and the user is only alerted (i.e. the information will only be retained in buffer 38 and/or presented on screen 34) if comparison of stored preference data and subject matter indicators in the message indicate that an item of data of particular interest has been received.

For conventional audio messages, the audio data is output by the filter and processing stage 32, via D/A converter 42 and amplifier 44 to an earphone or speaker 46. Receipt of such messages from the telephone network 48 is indicated by arrow 50: the telephone network 48 also provides the link from the telephone 10 to a wide-area network (WAN) server 52 and, via the WAN 54 (which may be the internet), to one or more remote service providers 56 providing a source of data for the telephone 10.

Communication between the CA terminal (telephone 10) and the CA base station (beacon 12) takes two forms: 'push' and 'pull'. In 'push' mode, information is broadcast by the beacons 12, 14, to all portable terminals 10 in the form of short 'keys' indicated at 60. The keys will take various forms according to the application but will generally include a concise description of the information being sent and a pointer to fuller information, e.g. a URL identifying one of the service providers 56.

Keys are received by the terminal 10 'unconsciously', that is, without direct intervention by the user, and automatically filtered according to the user's pre-set preferences by a comparator function applied in processing stage 32. Suitably, the processing stage is operable to apply the comparator function in multiple simultaneous or overlapping copies such as to process in parallel the relatively large number of keys that may be received. Some will be discarded, some kept for further study, others might cause the user to be alerted immediately. By way of example, shops might choose to push details of special offers into passing terminals in the knowledge that users who have interest and have therefore set their filters 32 accordingly will be alerted by their terminal.

Sometimes the user will wish to obtain more information than is contained in the keys. Here, 'pull' mode allows a user to set up a connection with a server 56 (which need not necessarily be specially configured for CA use) and actively request information to pull down into the terminal 10. This mode is therefore typically interactive.

Whilst base stations or beacons will typically be independent of one another (in a shopping mall set up, each shop provides and maintains its own beacon without reference to any beacons provided by neighbouring shops), the beacons may be wholly or partially networked with at least some co-ordination as to their broadcast messages.

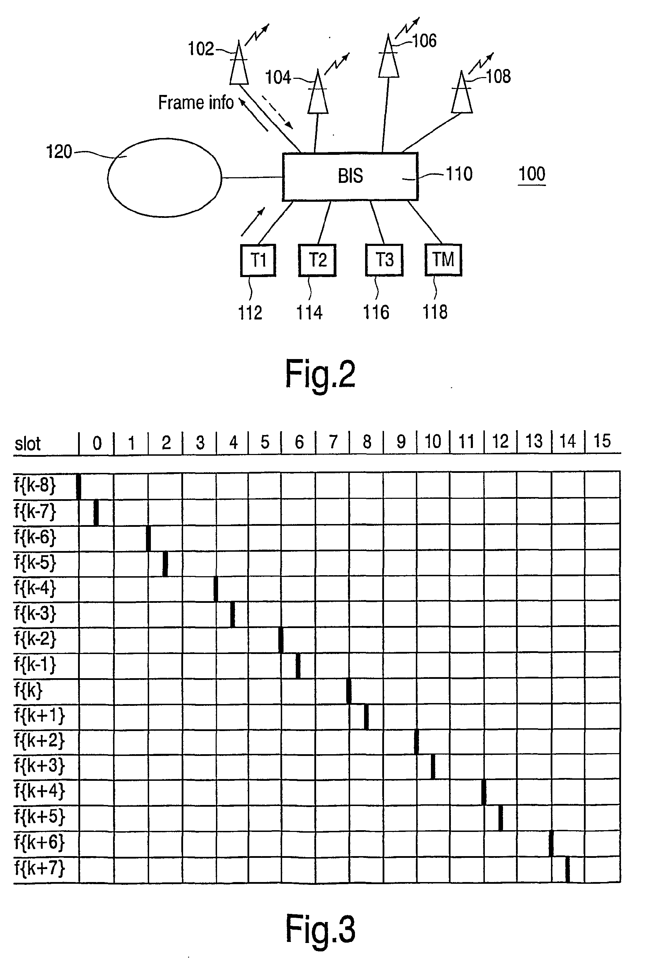

Figure 2 is a diagram of such a system 100 of linked beacons providing an implementation of an infrastructure for use in, for example, department stores, shopping malls, theme parks, etc. The system 100 comprises a plurality of beacons 102, 104, 106, 108 distributed over a series of locales. Each of the beacons 102-108 broadcasts one or more short-range inquiry signals in a time-slot format as described in greater detail hereinafter. The beacons 102 - 108 are controlled by a beacon infrastructure server (BIS) 110, with one or more terminals 112, 114, 116, 118 being connected to the server 110. The terminals 112 - 118 enable service providers, i.e., the users of beacons 102 - 108, to author or edit allocated service slots in the form of added data piggy backed on inquiry facilitation signals transmitted by beacons 102 - 108. A service provider may lease a beacon or one of the beacon's service slots from the infrastructure provider. To this end, server 110 provides simple HTML templates for filling out by the user via one of terminals 112 - 118. Having filled out the template with, for example, a description of the service and other information for the data to be carried via the beacon broadcast, the template is returned to server 110, preferably via a secure link using, e.g., Secure HTTP (S-HTTP) or Secure Sockets Layer (SSL). SSL creates a secure link between a client and a server, over which any amount of data can be sent securely. S-HTTP is designed to transmit individual messages securely. Server 110 then creates the appropriate additional data package for appending to the inquiry signal of a relevant one of the beacons 102 - 108 based on the information submitted with the template. The system 100 may further comprise an application server 120 to assist in carrying out various functions, as will be readily understood by the skilled reader.

Referring back to Figure 1, a strong candidate technology for the wireless link necessary for at least the 'push' mode of the above-described CA system is Bluetooth, on the grounds that it is expected to become a component part of a large number of mobile telephones 10. In analysing the Bluetooth protocol for CA broadcast or 'push' mode utilisation, a problem may be seen. In the ideal case, the terminal 10 will detect fixed beacons 12, 14 and extract basic information from them without the terminal 10 needing to transmit at all. However, this type of broadcast operation is not supported by the current Bluetooth specification.

In part, the incompatibility follows the frequency hopping nature of Bluetooth beacon systems which means that, in order for broadcast messages (or, indeed, any messages) to be received by a passing terminal, the terminal has to be synchronised to the beacon in both time and frequency. The portable device 10 has to synchronise its clock to the beacon clock and, from the beacons identity, deduce which of several hopping sequences is being employed.

To make this deduction, the portable device has conventionally been required to join - as a slave - the piconet administered by the beacon as piconet master. Two sets of procedures are used, namely "inquiry" and "page". Inquiry allows a would-be slave to find a base station and issue a request to join the piconet. Page allows a base station to invite slaves of its choice to join the net. Analysis of these procedures indicates that the time taken to join a piconet and then be in a position to receive information from the master could be several tens of seconds, which is much too long for CA applications, where a user may move out of range of a beacon before joining could be completed.

The difficulty of receiving broadcast data from beacons is caused at least partially by the frequency-hopping nature of Bluetooth and similar systems. The Bluetooth inquiry procedure has been proposed specifically to solve the problem of bringing together master and slave: the applicants have recognised that it is possible to piggy-back a broadcast channel on the inquiry messages issued by the master. Only CA terminals need read the broadcast channel messages and only CA base stations or beacons send them. In consequence, at the air interface, the mechanism is entirely compatible with conventional (non-CA) Bluetooth systems.

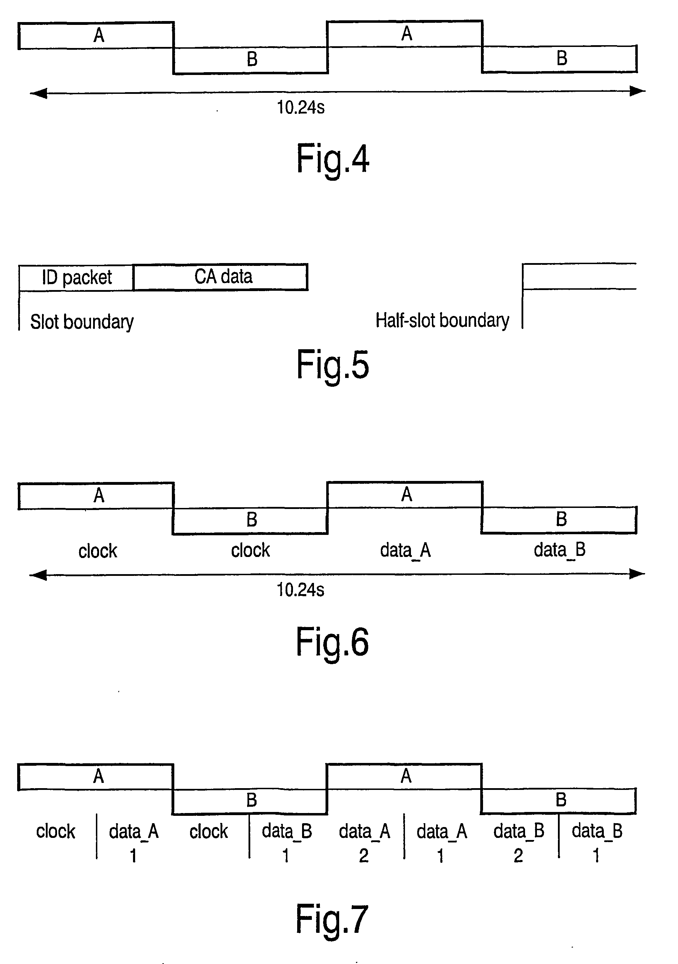

To illustrate how this is implemented, we first consider how the Inquiry procedures themselves operate, with reference to Figures 3 and 4. When a Bluetooth unit wants to discover other Bluetooth devices, it enters a so-called inquiry substate. In this mode, it issues an inquiry message containing a General Inquiry Access Code (GIAC) or a number of optional Dedicated Inquiry Access Codes (DIAC). This message transmission is repeated at several levels; first, it is transmitted on 16 frequencies from a total of 32 making up the inquiry hopping sequence. The message is sent twice on two frequencies in even timeslots with the following, odd timeslots used to listen for replies on the two corresponding inquiry response hopping frequencies. Sixteen frequencies and their response counterparts can therefore be covered in 16 timeslots, or 10ms. The chart of Figure 3 illustrates the transmission sequence on sixteen frequencies centred around f{k}, where f{k} represents the inquiry hopping sequence.

The next step is the repetition of the transmission sequence at least N_{inquiry} times. At the very least, this should be set at N_{inquiry} = 256 repetitions of the entire sequence which constitutes a train of transmissions which we refer to as inquiry transmission train A. Next, inquiry transmission train A is swapped for inquiry transmission train B consisting of a transmission sequence on the remaining 16 frequencies. Again, the train B is made up of 256 repetitions of the transmission sequence. Overall, the inquiry transmission cycle between transmissions of train A and train B. As shown by Figure 4, the specification states that this switch between trains must occur at least three times to ensure the collection of all responses in an error-free environment. This means that an inquiry broadcast could take at least 10.24 seconds.

One way to reduce this would be for the switch between inquiry transmission trains to be made more rapidly, i.e. without waiting until the 2.56 seconds for 256 repetitions of the 10ms to cover the 16 timeslots is up. This may suitably be accomplished by setting the systems to switch over if no inquiry message is detected after say 50ms, on the understanding that no such message will be detected in the remainder of the present train.

A portable device that wants to be discovered by a beacon enters the inquiry scan substate. Here, it listens for a message containing the GIAC or DIAC's of interest. It, too, operates in a cyclic way. It listens on a single hop frequency for an inquiry scan period which must be long enough to cover the 16 inquiry frequencies used by the inquiry. The interval between the beginning of successive scans must be no greater than 1.28 seconds. The frequency chosen comes from the list of 32 making up the inquiry hopping sequence.

On hearing an inquiry containing an appropriate IAC, the portable device enters a so-called inquiry response substate and issues a number of inquiry response messages to the beacon. The beacon will then page the portable device, inviting it to join the piconet.

As mentioned above and shown in Figure 5, the applicants propose that the inquiry messages issued by the base station have an extra field appended to them, capable of carrying a user-defined payload (CA DATA). In the CA scenario, this payload is used to carry broadcast information, or keys, to CA terminals during the inquiry procedure. By adding the field to the end of the inquiry message, it will be appreciated that non-CA receivers can ignore it without modification. In addition, by using a CA-specific DIAC, CA receivers can be alerted to the presence of the extra information field.

The presence of the extra data field means that the guard space conventionally allowed at the end of a Bluetooth inquiry packet is reduced. However, this space - provided to give a frequency synthesizer time to change to a new hop frequency - will be generally unused otherwise, as current frequency synthesizers are capable of switching at speeds which do not need extension into the extra guard space. The standard inquiry packet is an ID packet of length 68 bits. Since it is sent in a half-slot, the guard space allocated is (625/2 - 68) = 244.5 µs (625 µs slot period, 1 Mbit/s signalling rate). Modern synthesizers can switch in much less time with figures of 100 µs or lower considered routine by experts in the field. Applicants therefore propose allocation of 100 bits as a suitable size for this new field, although it will be readily understood that other field sizes are, of course, possible.

CA handsets can receive the broadcast data quickly without being required to run through a lengthy procedure to join a piconet. In addition, since there is no need for the handset to transmit any information whatsoever, there is a consequent power saving that will be particularly important in dense environments where many CA base stations may be present. Nevertheless, when the handset is in interactive mode and wishes to join a piconet in order to obtain more information, it may employ the default inquiry procedures as normal. There is no loss of functionality through supporting the additional data field.

In a typical embodiment, four of our 100 bits will be lost as trailer bits for the ID field; this is a consequence of it being read by a correlator. Of the 96 bits remaining, applicants preferred allocation is that 64 be used as data and 32 as a 2/3 FEC (forward error correction) checksum although the checksum, any headers included, and other overheads may greatly reduce the number of bits available for data, perhaps to 10 bits or fewer in some circumstances. Each inquiry burst thus contains 8 bytes of broadcast data. In a most common scenario, by the second group of.A and B trains the portable device has found the base station, understood it to be a CA beacon and is awaiting the broadcast data. Since it will be listening specifically, the portable device will at least be able to read 256 bursts of data twice (A and B), giving us two lots of 2 Kbytes, or 4 Kbytes in total.

At this stage, the portable device does not know the phase of the beacons clock because this information is not been transmitted. To assist the portable device, clock information is transmitted in at least some of the trains in the first A and B groups, as shown in Figure 6, together with some auxiliary information indicating when the next switches between A and B will occur. This clock information will be transmitted in place of the CA broadcast data so means are provided to discriminate between the two data channels. Use of separate DIAC's is one possible method.

In the case where the portable device knows the timing of the beacon, the portable devices also knows how it will hop, which gives the ability to track all transmissions of a train. Since there are 16 transmissions in a frame, then the resultant CA channel has 16 times as much capacity and can convey 64 Kbytes of information.

Since the terminal wakes up every 1.28 seconds or less, it will generally have obtained the clocking information it needs by the half way mark in the first A or B periods. Switching from clock to data at these halfway marks, as illustrated in Figure 7, provides a number of useful advantages. Firstly, some data can be received in less than five seconds from the start of the inquiry procedure. Secondly, the terminal can still respond to an important key by automatically issuing an inquiry response message to the base station (if that is the appropriate action for the terminal to take) even if the key appears comparatively late in the cycle. It will be noted that no increase in capacity is assumed.

In the foregoing, a portable device will receive all the additional data field packets on one of the 32 inquiry channels, thereby using only 1/32 of the available bandwidth. As will be recognised, if the uncertainty as to when a portable terminal (beacon slave) receives the first inquiry packet can be overcome, the predetermined nature of the hopping sequence may be accommodated and the full bandwidth therefore utilised. For a slave to synchronize with a masters inquiry hopping sequence from the point where it received the first packet, the slave needs to know both the masters clock offset and the position of the first received packet in the masters hopping sequence. In the following example, it is assumed that the master follows the Bluetooth minimum enquiry procedure, which comprises 256 repetitions of the 16-channel inquiry hopping sequences, with three train switches (as in Figure 4). Each sweep across the 16 channels takes 10ms.

An alternative method of synchronizing the slave hopping is to transmit clocking data in every broadcast field. The additional data field (BCD; Fig. 1) carries 4 bytes containing the following information:
- Master clock offset (2 bytes);
- Number of full train repetitions (1 byte) - assuming that a full train consists of 256 repetitions of 10ms trains, the range of this parameter is 0-255 (before the inquiry switches to the next full train). This indicates to the slave when the master will next switch the full train.
- How many full train switches have been completed in the current inquiry cycle (1 byte) - this data indicates to the slave what the master is likely to do at the end of the current full train, i.e. whether it will switch over to another full train or whether the inquiry procedure will terminate.

As long as no channel repeats in the 10ms train, no field is required to indicate the position of the current channel in the hopping sequence as the slave is able to derive this from knowledge of the sequence.

From the foregoing it will be seen that, by adding 4 bytes to each additional field packet, the slave can then pick up all additional field packets to the end of the inquiry, whilst still having 4 bytes available (from our preferred assignment of 64 from 100 bits for data) to carry broadcast data.

Considering a complete beacon signal, it will be readily understood that it will need to be divided into a number of 4-byte packets with one being sent with each inquiry packet. Assuming a fixed length of beacon signal for the purposes of illustration, at 16kB the full signal can be accommodated on a single inquiry train (a train being 256 repetitions of the 16-channel hop sequence, giving 256*16*4 bytes = 16kB).

Extending this, by fixing that the first packet of a beacon signal goes on the first packet of an inquiry train, from the message indicator field for the number of repetitions for the current 16-channel hopping sequence in the message header, the slave is enabled to derive the position of the beacon packet it has received in the complete beacon signal.

From reading the present disclosure, other modifications within the scope of the claims will be apparent to persons skilled in the art. As an example, rather than the foregoing scheme of having 4 clock and 4 data bytes in every broadcast packet, other arrangements may be used: an arrangement of 2 clock and 6 data bytes in 15 out of every 16 packets (with 4 clock and 4 data bytes in every sixteenth packet) improves the data carrying capability without necessarily detracting from the synchronization performance.

## Claims

1. A Bluetooth communications system comprising at least one beacon device (12) capable of wireless message transmission and at least one portable communications device (10) capable of receiving such a message transmission, wherein the beacon device (12) is arranged to broadcast a series of inquiry messages (60), each inquiry message being in the form of a plurality of predetermined data fields (INQ) arranged according to the Bluetooth communications protocol, wherein the beacon device (12) is further arranged to append to each inquiry message an additional data field (BCD), and wherein the at least one portable communications device (10) is arranged to receive the transmitted inquiry messages and additional data fields and read data from said additional data field (BCD).

2. A system as claimed in Claim 1, wherein the beacon device (12) is arranged to append said additional data field (BCD) at the end of a respective inquiry message (60).

3. A system as claimed in Claim 1 or Claim 2, wherein the beacon device (12) is arranged to include an indication in one of said predetermined data fields (INQ), said indication denoting the presence of said additional data field (BCD).

4. A system as claimed in Claim 1, wherein the beacon device (12) is configured to broadcast a series of inquiry messages (60) on a predetermined succession of frequencies in a series of time slots, with clock information for said beacon device (12) being included in data carried by said additional data field (BCD).

5. A system as claimed in any of Claims 1 to 4, wherein said additional data field (BCD) carries at least 64 bits of data.

6. A system as claimed in Claim 1, wherein the beacon device (12) is arranged to include in a message first comparison data, the portable communications device (10) further comprising storage means (40) holding second comparison data and comparator means (32) arranged to identify when there is a match between the first and second comparison data and present the data read from the additional data field, otherwise to not present the data.

7. A system as claimed in Claim 6, further comprising means for generating said second comparison data from user profiling of the portable communications device user.

8. A portable communications device (1 0) for use in the system of any of Claims 1 to 7, the device comprising a receiver (18) capable of receiving a short-range wireless inquiry message including a plurality of data fields (INQ) according to the Bluetooth communications protocol, means (32) for determining when an additional data field has been appended to said plurality of data fields, and means for reading data from such an additional data field and presenting the same to a user.

9. A beacon device (12) capable of wireless message transmission and for use in a communications system as claimed in any of Claims 1 to 7, wherein the beacon device is configured to broadcast a series of inquiry messages (60) each in the form of a plurality of predetermined data fields (INQ) arranged according to the Bluetooth communications protocol, and to append to each inquiry message an additional data field (BCD), such as to enable at least one portable communications device of the system arranged to receive the transmitted inquiry messages to read data from said additional data field.

10. A beacon device as claimed in Claim 9, arranged to append said additional data field (BCD) at the end of a respective inquiry message (60).

11. A beacon device as claimed in Claim 9 or Claim 10, arranged to s include an indication in one of said predetermined data fields (INQ), said indication denoting the presence of said additional data field (BCD).

12. A beacon device as claimed in Claim 9, wherein the beacon device (12) is configured to broadcast a series of inquiry messages (60) on a predetermined succession of frequencies in a series of time slots, with clock information for said beacon device (12) being included in data carried by said additional data field (BCD).

13. A method for enabling the user of a portable communications device (10) to receive broadcast messages wherein at least one beacon device (12) broadcasts a series of inquiry messages (60), wherein each inquiry message is in the form of a plurality of predetermined data fields (INQ) arranged according to the Bluetooth communications protocol, wherein the beacon device (12) appends to each inquiry message an additional data field (BCD) carrying broadcast message data, and wherein the portable communications device (10) receives the transmitted inquiry messages and additional data fields and reads the broadcast data from said additional data field.

14. A method as claimed in Claim 13, wherein the beacon device (12) appends said additional data field (BCD) at the end of a respective inquiry message (60).

15. A method as claimed in Claim 13 or Claim 14, wherein the beacon device (12) includes an indication in one of said predetermined data fields (INQ), said indication denoting the presence of said additional data field (BCD).

## Patentansprüche

1. Bluetooth-Kommunikationssystem mit wenigstens einer Bakeneinrichtung (12), die zur drahtlosen Nachrichtenübertragung fähig ist, und wenigstens einer tragbaren Kommunikationsanordnung (10), die zum Empfang einer derartigen Nachrichtenübertragung fähig ist, wobei die Bakenanordnung (12) zum Aussenden einer Reihe von Abfragenachrichten (60) vorgesehen ist, wobei jede Abfragenachricht in Form einer Anzahl vorbestimmter Datenfelder (INQ) ist, gegliedert entsprechend dem Bluetooth-Kommunikationsprotokoll, wobei die Bakeneinrichtung (12) weiterhin dazu vorgesehen ist, an jede Abfragenachricht ein zusätzliches Datenfeld (BCD) anzuhängen, und wobei die wenigstens eine tragbare Kommunikationsanordnung (10) dazu vorgesehen ist, die übertragenen Abfragenachrichten und die zusätzlichen Datenfelder zu empfangen und aus dem genannten zusätzlichen Datenfeld (BCD) Daten auszulesen.

2. System nach Anspruch 1, wobei die Bakeneinrichtung (12) dazu vorgesehen ist, das genannte zusätzliche Datenfeld (BCD) an das Ende einer betreffenden Abfragenachricht (60) anzuhängen.

3. System nach Anspruch 1 oder 2, wobei die Bakeneinrichtung (12) dazu vorgesehen ist, in eines der genannten vorbestimmten Datenfelder (INQ) eine Indikation einzuschließen, wobei diese Indikation das Vorhandensein des genannten zusätzlichen Datenfeldes (BCD) bezeichnet.

4. System nach Anspruch 1, wobei die Bakeneinrichtung (12) zum Aussenden einer Reihe von Abfragenachrichten (60) über eine vorbestimmte Folge von Frequenzen in einer Reihe von Zeitschlitzen vorgesehen ist, wobei die Taktinformation für die genannte Bakeneinrichtung (12) in Daten eingeschlossen ist, die von dem genannten zusätzlichen Datenfeld (BCD) getragen werden.

5. System nach einem der Ansprüche 1 bis 4, wobei das genannte zusätzliche Datenfeld (BCD) wenigstens 64 Datenbits trägt.

6. System nach Anspruch 1, wobei die Bakeneinrichtung (12) dazu vorgesehen ist, in eine Nachricht erste Vergleichsdaten einzuschließen, wobei die tragbare Kommunikationsanordnung (10) weiterhin Speichermittel (40) aufweist, die zweite Vergleichsdaten festhalten, und Vergleichsmittel (32), vorgesehen um zu identifizieren, wenn es zwischen den ersten und den zweiten Vergleichsdaten eine Übereinstimmung gibt und zum Präsentieren der aus dem zusätzlichen Datenfeld ausgelesenen Daten und anderenfalls die Daten nicht zu präsentieren.

7. System nach Anspruch 6, das weiterhin Mittel zum Erzeugen der genannten zweiten Vergleichsdaten aus der Benutzerprofilierung des Benutzers der tragbaren Kommunikationsanordnung aufweist.

8. Tragbare Kommunikationsanordnung (10) zur Verwendung in dem System nach einem der Ansprüche 1 bis 7, wobei die Anordnung einen Empfänger (18) aufweist, der imstande ist, eine drahtlose Kurzbereich-Abfragenachricht mit einer Anzahl Datenfelder (INQ) entsprechend dem Bluetooth-Kommunikationsprotokoll zu empfangen, Mittel um zu ermitteln, wenn ein zusätzliches Datenfeld an die genannte Anzahl Datenfelder angehängt worden ist, und Mittel zum Auslesen von Daten aus einem derartigen Datenfeld und zum Präsentieren derselben an einen Benutzer.

9. Bakeneinrichtung (12), die imstande ist, drahtlos Nachrichten zu übertragen und vorgesehen zur Verwendung in einem Kommunikationssystem nach einem der Ansprüche 1 bis 7, wobei die Bakeneinrichtung derart ausgebildet ist, dass sie eine Reihe von Abfragenachrichten (60) aussendet, je in Form einer Anzahl vorbestimmter Datenfelder (INQ), die entsprechend dem Bluetooth-Kommunikationsprotokoll gegliedert sind, und dass sie ein zusätzliches Datenfeld (BCD) an jede Abfragenachricht anhängt, damit wenigstens eine tragbare Kommunikationsanordnung des Systems freigegeben wird, vorgesehen um die übertragenen Abfragenachrichten zu empfangen und Daten aus dem genannten zusätzlichen Datenfeld auszulesen.

10. Bakeneinrichtung nach Anspruch 9, vorgesehen zum Anhängen des genannten zusätzlichen Datenfeldes (BCD) an das Ende einer betreffenden Abfragenachricht (60).

11. Bankeneinrichtung nach Anspruch 9 oder 10, vorgesehen zum Einschließen einer Angabe in eines der genannten vorbestimmten Datenfelder (INQ), wobei diese Angabe das Vorhandensein des genannten zusätzlichen Datenfeldes (BCD) bezeichnet.

12. Bakeneinrichtung nach Anspruch 9, wobei die Bakeneinrichtung (12) dazu vorgesehen ist, eine Reihe von Abfragenachrichten (60) über eine vorbestimmte Folge von Frequenzen in einer Reihe von Zeitschlitzen auszusenden, wobei Taktinformation für die genannte Bakeneinrichtung (12) in Daten eingeschlossen ist, die von dem genannten zusätzlichen Datenfeld (BCD) getragen werden.

13. Verfahren, nach dem der Benutzer einer tragbaren Kommunikationsanordnung (10) ausgesendete Nachrichten empfangen kann, wobei wenigstens eine Bakeneinrichtung (12) eine Reihe von Abfragenachrichten (60) aussendet, wobei jede Abfragenachricht in Form einer Anzahl vorbestimmter Datenfelder ist, die entsprechend dem Bluetooth-Kommunikationsprotokoll gegliedert sind, wobei die Bakeneinrichtung (12) an jede Abfragenachricht ein zusätzliches Datenfeld (BCD) anhängt, das Sendenachrichtendaten trägt, und wobei die tragbare Kommunikationsanordnung (10) die übertragenen Abfragenachrichten und die zusätzlichen Datenfelder empfängt und die Sendedaten aus dem zusätzlichen Datenfeld ausliest.

14. Verfahren nach Anspruch 13, wobei die Bakeneinrichtung (12) das genannte zusätzliche Datenfeld (BCD) an das Ende einer betreffenden Abfragenachricht (60) anhängt.

15. Verfahren nach Anspruch 13 oder 14, wobei die Bakeneinrichtung (12) eine Angabe in einem der genannten vorbestimmten Datenfelder (INQ) aufweist, wobei die genannte Angabe das Vorhandensein des genannten zusätzlichen Datenfeldes (BCD) bezeichnet.

## Revendications

1. Système de communication Bluetooth comprenant au moins un dispositif balise (12) capable d'effectuer une transmission de message sans fil et au moins un dispositif de communication portable (10) capable de recevoir une telle transmission de message, dans lequel le dispositif balise (12) est à même de diffuser une série de messages d'interrogation (60), chaque message d'interrogation se présentant sous la forme d'une pluralité de champs de données prédéterminés (INQ) organisés selon le protocole de communication Bluetooth, dans lequel le dispositif balise (12) est en outre à même de joindre à chaque message d'interrogation un champ de données supplémentaire (BCD), et dans lequel le au moins un dispositif de communication portable (10) est à même de recevoir les messages d'interrogation et les champs de données supplémentaires transmis et d'extraire des données dudit champ de données supplémentaire (BCD).

2. Système suivant la revendication 1, dans lequel le dispositif balise (12) est à même de joindre ledit champ de données supplémentaire (BCD) à la fin d'un message d'interrogation (60) respectif.

3. Système suivant la revendication 1 ou la revendication 2, dans lequel le dispositif balise (12) est à même d'inclure une indication dans un desdits champs de données (INQ) prédéterminés, ladite indication indiquant la présence dudit champ de données supplémentaire (BCD).

4. Système suivant la revendication 1, dans lequel le dispositif balise (12) est configuré pour diffuser une série de messages d'interrogation (60) sur une succession prédéterminée de fréquences dans une série de tranches de temps, des informations d'horloge correspondant audit dispositif balise (12) étant incluses dans des données acheminées par ledit champ de données supplémentaire (BCD).

5. Système suivant l'une quelconque des revendications 1 à 4, dans lequel ledit champ de données supplémentaire (BCD) comporte au moins 64 bits de données.

6. Système suivant la revendication 1, dans lequel le dispositif balise (12) est à même d'inclure dans un message des premières données de comparaison, le dispositif de communication portable (10) comprenant en outre des moyens de stockage (40) dans lesquels sont conservées des deuxièmes données de comparaison et des moyens comparateurs (32) à même d'identifier à quel moment les premières et les deuxièmes données de comparaison correspondent et de présenter les données extraites du champ de données supplémentaire, autrement de ne pas présenter les données.

7. Système suivant la revendication 6, comprenant en outre des moyens pour générer lesdites deuxièmes données de comparaison à partir du profil utilisateur de l'utilisateur du dispositif de communication portable.

8. Dispositif de communication portable (10) à utiliser dans le système suivant l'une quelconque des revendications 1 à 7, le dispositif comprenant un récepteur (18) capable de recevoir un message d'interrogation sans fil de courte portée incluant une pluralité de champs de données (INQ) selon le protocole de communication Bluetooth, des moyens (32) pour déterminer à quel moment un champ de données supplémentaire a été joint à ladite pluralité de champs de données, et des moyens pour extraire des données d'un tel champ de données supplémentaire et les présenter à un utilisateur.

9. Dispositif balise (12) capable d'effectuer une transmission de message sans fil et à utiliser dans un système de communication suivant l'une quelconque des revendications 1 à 7, dans lequel le dispositif balise est configuré pour diffuser une série de messages d'interrogation (60), chaque message d'interrogation se présentant sous la forme d'une pluralité de champs de données prédéterminés (INQ) organisés selon le protocole de communication Bluetooth, et de joindre à chaque message d'interrogation un champ de données supplémentaire (BCD), de manière à valider au moins un dispositif de communication portable du système à même de recevoir les messages d'interrogation transmis pour extraire des données dudit champ de données supplémentaire.

10. Dispositif balise suivant la revendication 9, à même de joindre ledit champ de données supplémentaire (BCD) à la fin d'un message d'interrogation (60) respectif.

11. Dispositif balise suivant la revendication 9 ou la revendication 10, à même d'inclure une indication dans un desdits champs de données (INQ) prédéterminés, ladite indication indiquant la présence dudit champ de données supplémentaire (BCD).

12. Dispositif balise suivant la revendication 9, dans lequel le dispositif balise (12) est configuré pour diffuser une série de messages d'interrogation (60) sur une succession prédéterminée de fréquences dans une série de tranches de temps, des informations d'horloge correspondant audit dispositif balise (12) étant incluses dans des données acheminées par ledit champ de données supplémentaire (BCD).

13. Procédé permettant à l'utilisateur d'un dispositif de communication portable (10) de recevoir des messages de diffusion dans lequel au moins un dispositif balise (12) diffuse une série de messages d'interrogation (60), dans lequel chaque message d'interrogation se présentant sous la forme d'une pluralité de champs de données prédéterminés (INQ) organisés selon le protocole de communication Bluetooth, dans lequel le dispositif balise (12) joint à chaque message d'interrogation un champ de données supplémentaire (BCD) acheminant des données de message de diffusion, et dans lequel le dispositif de communication portable (10) reçoit les messages d'interrogation et les champs de données supplémentaires transmis et extrait les données de diffusion dudit champ de données supplémentaire.

14. Procédé suivant la revendication 13, dans lequel le dispositif balise (12) joint ledit champ de données supplémentaire (BCD) à la fin d'un message d'interrogation (60) respectif.

15. Procédé suivant la revendication 13 ou la revendication 14, dans lequel le dispositif balise (12) inclut une indication dans un desdits champs de données (INQ) prédéterminés, ladite indication indiquant la présence dudit champ de données supplémentaire (BCD).
